# EUROPEAN PATENT APPLICATION

(11) **EP 4 332 320 A1**
(43) Date of publication of application: **06.03.2024**
(21) Application number: 23194527.0
(22) Date of filing: 31.08.2023
(51) Int. Cl.: E04D 13/00, E04D 3/366, G01M 3/16, E04B 7/22

(54) **WATERPROOF ROOF WITH A CONDUCTIVE BASE OF HEAT-INSULATING PIR-BOARDS AND CONSTRUCTION METHOD THEREOF**

(30) Priority: 31.08.2022 RU 2022123326
(71) Applicant: Limited liability company "TechnoNICOL-Construction Systems", Moscow 129110 (RU)
(72) Inventor: SAMOILIN, Vladislav Valerievich, Ryazan (RU); NAGAEV, Ildus Filaritovich, Moscow (RU)
(74) Representative: Yalçiner Patent and Consulting Ltd.

(57) **Abstract**

The invention relates to the construction industry, in particular to the roofing membranes allowing to perform diagnostic tests for the detection and locating water penetrations, in particular to waterproof roofs having heat-insulating composite boards, which can be used as a electroconductive base in the diagnostics of waterproof low-pitched and flat roofs for unintended water penetrations, and also refers to the waterproof roof mounting method. The present invention provides a waterproof roof comprising an electroconductive base over which the overlapping waterproofing elements (2) are placed, wherein the electroconductive base is made of heat-insulating boards (1) made of polyisocyanurate foam (PIR) coated with an electroconductive material, and electroconductive fabric tapes (3) placed on top of each board (1) and fastened to the waterproofing elements (2), as well as to the boards (1), to form an integrated electroconductive base combining the heat-insulating boards (1) altogether, and a waterproof roof mounting method.

## Description

### Technical Field

The present invention relates to the constructions, in particular to the roofing membranes examination for detecting water permeation and location thereof, in particular to waterproof roofs with heat-insulating composite boards, which can be used as a conductive base in the examination method of waterproof low-pitched and flat roofs for uncontrolled water permeation, and also provides a method of forming a roof waterproofing system.

### Background Art

A major cause of early roof failure is that minor roof damage is not timely detected, located, and fixed. Especially this relates to roofing materials used on low-pitched or flat roofs. Even with proper design and installation, all roofing materials deteriorate under the influence of bad weather at a rate that is largely determined by the material type and exposure conditions.

The high voltage method is one of the known methods for waterproof low-pitched and flat roofs check for uncontrolled water permeation. The method involves detecting defects of the waterproof membrane using a short circuit that occurs when an electrode with a potential from the power supply is connected on the waterproofing side, with a grounding wire attached to the conductive substrate. Current passes through the coating at the defected points, and reaches the grounded substrate. This causes a short circuit, and a spark forms allowing to detect the location of the defects of the waterproofing coating.

Patent document RU 201323 (prototype) discloses a waterproof roof comprising a conductive base located inside the roof, over which the overlapping waterproofing sheets are laid down connected to each other, wherein a conductive contact tape is mechanically secured inside the joints of the waterproofing sheets such that one side of the conductive contact tape is in contact with the conductive base.

A nominally conductive base can be used as a conductive base, including a foil-coated hydrophobic material. As an example of such a foil-coated hydrophobic material, "Kontrolit" material is used in the prototype, consisting of spunbond and aluminum laid over a PIR-board, i.e. a polyisocyanurate foam board, or an extruded polystyrene foam board.

Notably, a disadvantage of the prior art technical solution is that a separate conductive layer should be placed between the waterproofing material and the heat-insulation (PIR-board) throughout the whole roof area, which complicates the roof construction process and increases its cost.

In addition, the prior art solution is silent about the electrical connection of the PIR-boards with each other, which may have a negative impact on roof durability in terms of leak tightness and reduce the reliability of the check results due to poor contact between the adjacent boards and its further degradation when in use.

Thus, so far there is a need for technical solutions that allow convenient and reliable monitoring of waterproofing low-pitched and flat roofs for undesired water permeation in order to be able to detect, locate, and fix any minor roof defects as early as possible.

### Disclosure of Invention

The technical problem of the invention is to provide a waterproof roof configured for performing a check its waterproofing coating for leakages.

The technical result provided by the invention is improvement of roof construction manufacturability, i.e. a combination of properties defining its adaptability to optimize manufacturing maintenance and service costs for the given characteristics of quality, production capacity and operational conditions (GOST 14.205-83 "Construction products manufacturability. Terms and definitions"). In particular, the use of the proposed invention allows to install the waterproof roof faster, the roof being ready for leakage tests, as well as to significantly reduce the cost of materials per unit area for the conductive contour.

The object of the present invention is achieved by the waterproof roof comprising a electroconductive base, overlapping waterproofing elements placed over the electroconductive base to form a waterproofing membrane, wherein the electroconductive base is made of heat-insulating boards made of polyisocyanurate foam (PIR) coated with electroconductive material, and comprising electroconductive contact tapes placed over each of the heat-insulating boards, wherein the tapes are secured to the waterproofing elements and to the heat-insulating boards to form an integrated electroconductive base combining all the heat-insulating boards.

In one embodiment of the invention, the heat-insulating PIR-boards are placed with the abutting joints alternately offset to each other.

In one embodiment of the invention, the heat-insulating PIR-boards are coated with an aluminum-based electroconductive material.

In one embodiment of the invention, the aluminum-based electroconductive material for coating the PIR-boards is selected from aluminum foil and laminated aluminum.

In one embodiment of the invention, the electroconductive tape is located beneath the overlapping joints of the waterproofing elements.

In one embodiment of the invention, the electroconductive tape is located along the longitudinal side of the waterproofing element. In case the adjacent heat-insulating boards are not electrically interconnected by the electroconductive tape placed in such a way, the electroconductive base should contain an additional electroconductive tape secured along the transverse side of the waterproofing element to electrically interconnect the adjacent heat-insulating boards.

In one embodiment of the invention, the electroconductive tape is made of a fiber glass fabric with an electroconductive sputtering of nickel, magnesium, steel, aluminum, or graphite particles.

In one embodiment of the invention, the heat-insulating boards are fastened to the electroconductive tape and to the waterproofing element with a telescopic element or a steel plate element together with a drill or a sharp-tipped self-tapping screw, or a self-tapping screw on concrete.

In one embodiment of the invention, a plurality of connectors can be provided for the electroconductive tape, comprising two flanges between which the electroconductive tape is clamped and a rod for connecting electrical equipment for testing the waterproof roof for leakages, present in an amount of 1 rod per 2.000 - 2.500 m² of the roof area.

The present invention also describes a method of construction of the waterproof roof, comprising placing the heat-insulating boards made of polyisocyanurate foam (PIR) coated with an electroconductive material beneath a sheet of the overlapping waterproofing elements, the electroconductive contact tapes are then placed over each of the heat-insulating boards to form an integrated electroconductive base combining the heat-insulating boards altogether, and then mechanically securing the electroconductive tapes to the waterproofing elements and to the heat-insulating boards.

In one embodiment of the proposed method, the heat-insulating PIR-boards are placed with the abutting joints alternately offset to each other.

In one embodiment of the proposed method, the electroconductive tape is placed beneath the overlapping joints of the waterproofing elements.

In one embodiment of the proposed method, the electroconductive tape is located along the longitudinal side of the waterproofing element. In case the adjacent heat-insulating boards are not electrically interconnected by the electroconductive tape placed in such a way, the electroconductive base should contain an additional electroconductive tape secured along the transverse side of the waterproofing element to electrically interconnect the adjacent heat-insulating boards.

In one embodiment of the proposed method, the heat-insulating boards are fastened to the electroconductive tape and to the waterproofing element with a telescopic element or a steel plate element together with a drill or a sharp-tipped self-tapping screw, or a self-tapping screw on concrete.

In one embodiment of the proposed method, a plurality of connectors can be provided for the electroconductive tape, comprising two flanges between which the electroconductive tape is clamped and a rod for connecting electrical equipment for testing the waterproof roof for leakages, present in an amount of 1 rod per 2.000 - 2.500 m² of the roof area.

### Brief Description of Drawings

Fig. 1 shows a photo of a waterproof roof typically mounted without electroconductive tapes interconnecting the PIR-boards to form an electroconductive contour: a perspective view on the left side, and heat-insulating PIR-boards placed under the waterproofing membrane and the electroconductive base - on the right side.
Fig. 2 shows a photo of a waterproof roof typically mounted without the electroconductive tapes.
Fig. 3 shows an arrangement scheme of the PIR-boards with an additional electroconductive tape.
Fig. 4 shows an arrangement scheme of the PIR-boards with an additional electroconductive tape placed under the overlapping end connection of the waterproofing elements.
Fig. 5 shows a photo of a waterproofed roof: a perspective view on the left side, and heat-insulating PIR-boards placed under the waterproofing membrane with overlapping connection of the electroconductive tapes - on the right side.
Fig. 6 shows a general arrangement scheme of mounting the PIR-boards (at the top) and a side view of the placed PIR-boards interconnected by the electroconductive tape (at the bottom).
Fig. 7 shows a photo of the mounted connector.
Fig. 8 shows a photo of the connector during installation of its flange beneath the waterproofing membrane.

### Embodiments of the Invention

In recent years, heat-insulating composite materials made of polyisocyanurate foam (PIR) became the most marketable heat-insulating structural elements in this field, made in the form of rigid foams that can be shaped into slabs or panels.

Heat-insulating PIR-boards have balanced physical and mechanical properties crucial to their commercial success in the construction industry. Polyisocyanurate foam is known as a material with high fire-resistant properties combined with good heat-insulating properties and high strength, as well as low heat conduction.

Heat-insulating PIR-boards have a unique cell structure, both sides of the cells coated with a tailored material. Due to the closed cell structure and the coating, PIR-boards are practically waterproof (have about zero water absorption), highly resistant to fire, resistant to repeated physical loads (from employee passages), and have an extremely low heat conduction coefficient. PIR heat insulation maintains its properties and performance characteristics for more than 50 years.

The advantages of using heat-insulating PIR-boards include a reduction in the calculated load on the supporting structure due to lower density and a thinner heat-insulating layer. In addition, such boards guarantee energy efficiency and durability: they maintain their geometric dimensions during their entire service life - they do not sag under the influence of static and dynamic loads and do not shrink.

Heat-insulating PIR-boards have almost zero water absorption due to their closed cell structure: 95% closed pores with a very rigid fixed cell structure. PIR-boards retain performance characteristics due to rigid and durable base having high compressive strength of 120 kPa, and keeping strength by more than 0.5% after 30 stress cycles, involving no risk of waterproofing damage by fasteners during operation.

More than 95% of the material volume consists of closed gas-filled rigid cells formed by reactions of polyol with isocyanate and isocyanate with isocyanate. The closed rigid cells provide material mechanical strength, almost zero water absorption, extremely low heat conduction index (0.022 W/m°K), and high fire resistance.

In the present invention, heat-insulating PIR-boards are placed with offset board joints (i.e. in a staggered order) beneath a waterproofing membrane made of waterproofing elements (waterproofing layer that is usually formed from polymer roll membranes), the ends of which are overlapped and then fastened by welding or an adhesive, resulting in a strong weld or glue joint. A detailed description of the waterproof roof mounting process using the heat-insulating PIR-boards and waterproofing polymer roll membranes is disclosed on the technical portal of TECHNONICOL [digital media], for example at https://nav.tn.ru/upload/iblock/543/rtq0cvi27bslf90ubdk0io6ifqkfgc60/Instruktsiya -po-montazhu.-Kleevye-sistemy-s-primeneniem-PM-_HD_.pdf, as well as in the following information sources: SP 17.13330 "Roofs. Revised edition of SNiP II-26-76"; STO 72746455-3.8.1-2017 "Heat-insulating products from rigid TECHNONICOL polyisocyanurate foam (PIR). Technical conditions"; STO 72746455-3.4.1-2013 "TECHNONICOL polymer roll roofing and waterproofing materials. Technical conditions".

Electroconductive fabric strips/tapes are placed under the waterproofing membrane on top of the heat-insulating PIR-boards (heat insulation layer) and mechanically fastened to the waterproofing and heat insulation in order to electrically interconnect all heat-insulating boards together, and form an electroconductive base integrated with the tapes.

Electroconductive fabric tapes are preferably arranged alternately as the offset joints of the boards reduce the risk of boards cracking in the corners and improve the roof's thermal characteristics, i.e. increase its manufacturability.

Electroconductive fabric tapes are located in any place underneath the waterproofing, the main requirement is that all the heat-insulating PIR-boards should be electrically interconnected into an integrated electroconductive base. In terms of mounting, however, it is more convenient (but not obligatory) to place the electroconductive tape and at the same time fasten the overlapped waterproofing elements, as in such case the tape and the waterproofing elements do not have to be fastened separately. Thus, the electroconductive fabric tapes are usually placed along the longitudinal side of the waterproofing elements underneath the overlapping joints for easier mounting.

In contrast to the prototype where an electroconductive contact tape (strip) is fixed inside the joints of the waterproofing sheets in such a way that one side of the tape is in contact with the electroconductive base and allows the inspection of these sections for waterproofing, in the claimed invention the electroconductive fabric tape is placed underneath the waterproofing, including beneath the overlapping joints (rather than inside) of the waterproofing elements, and the tape is used as a jumper strap for electrically interconnecting all heat-insulating boards together and for forming an integrated electroconductive circuit - a united electroconductive base.

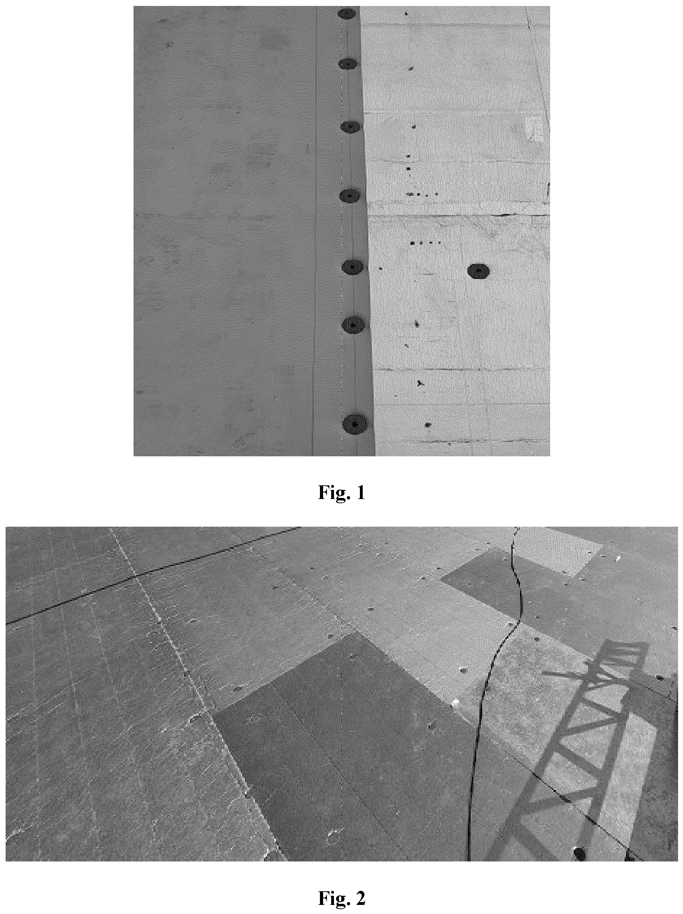

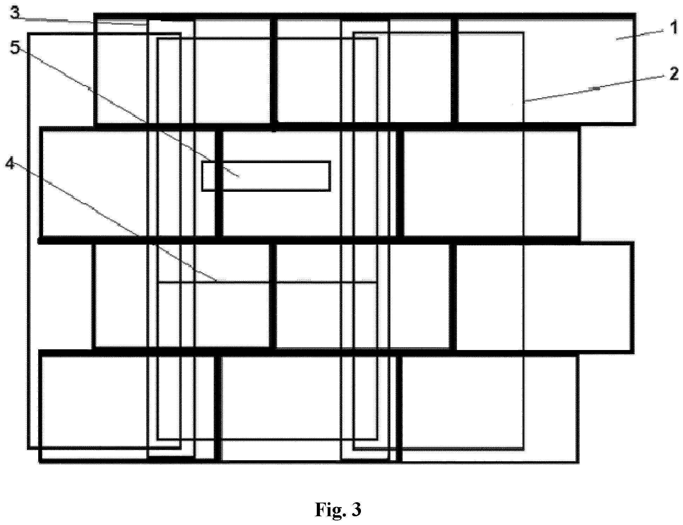

Fig. 1 and Fig. 2 show the typical mounting method of heat-insulating boards without electroconductive tapes, wherein the boards are not electrically interconnected, resulting in poor electrical contact, which only deteriorates over time, so such a system is not durable. Fig. 3 shows a scheme of connecting the heat-insulating boards with the electroconductive tapes, where 1 is a PIR-board; 2 is a waterproofing element; 3, 5 are electroconductive fabric tapes; 4 is an overlapping end of the waterproofing elements.

Heat-insulating PIR-boards usually have standard dimensions of 1.2 x 0.6m, or 2.4 x 1.2m, but any other commercial dimensions can be used.

PIR-boards can be coated with any suitable electroconductive material. This material can be selected, for example, from an aluminum-based material, including either aluminum foil or laminated aluminum, a multi-layer composite material of paper, aluminum foil and polyethylene. The thickness of a PIR-boards electroconductive material coating can vary depending on the requirements for heat-insulating boards, their thickness, the production characteristics of such boards, and other conditions.

The aluminum foil thickness providing fire retardant properties to the heat-insulating board and ensuring the foil's sufficient corrosion resistance, depends on the thickness of the used heat-insulating PIR-board. The aluminum foil normally used in PIR-boards is generally from 30 µm thick (for "thin" boards up to 40 mm thick) to 40 µm thick (for boards of 40 mm thick or greater). The aluminum laminate used in PIR-boards usually have a thickness of 50 µm.

Overlapping waterproofing elements are placed on top of the heat-insulating PIR-boards, to form a waterproofing membrane, under which the electroconductive tapes (strips) are placed (Fig. 3). The overlap spacing of the waterproofing elements is a calculated value that depends on the wind load of the roof. The standard rolls of waterproofing elements are 2.1 m and 1.05 m wide. When using heat-insulating boards and rolls of all sizes, including custom sizes, the spacing of the electroconductive tapes is calculated on the basis that all heat-insulating boards must be electrically interconnected to form a united electroconductive circuit.

Preferable arranging the heat-insulating boards in a staggered order, i.e. with offset joints, with the electroconductive fabric tapes makes it possible to create an electroconductive circuit over the entire area, i.e. a single electroconductive base of the boards with the tapes, as each board is electrically interconnected with the adjacent boards via the electroconductive fabric tapes. Generally, the electroconductive fabric tapes are placed along the longitudinal side of the waterproofing elements for easier mounting and material saving, which makes it faster and more economical to form a single electroconductive contour.

In case the PIR-boards arrangement pattern, including the alternate arrangement, does not provide the electrical interconnection of the adjacent boards with a single tape, an additional tape is provided along the transverse side of the waterproofing elements in order to electrically interconnect the boards (Fig. 3). If, for example, the boards are very small or not staggered due to their size, each board row may need to be connected to the adjacent row with an additional strip (tape): if the heat-insulating boards connected with an electroconductive strip along the longitudinal side of the waterproofing roll are not interconnected with the adjacent row of the boards, then an additional tape is fastened along the transverse side of the waterproofing roll to electrically interconnect them. Similarly, for example on roof parapets, the heat-insulating boards of standard size sometimes do not fit and have to be cut, in which case it is not always possible to interconnect the boards from adjacent rows with only one electroconductive tape, even using the offset joints, so an additional electroconductive tape should be used to interconnect the boards, as shown in Fig. 3.

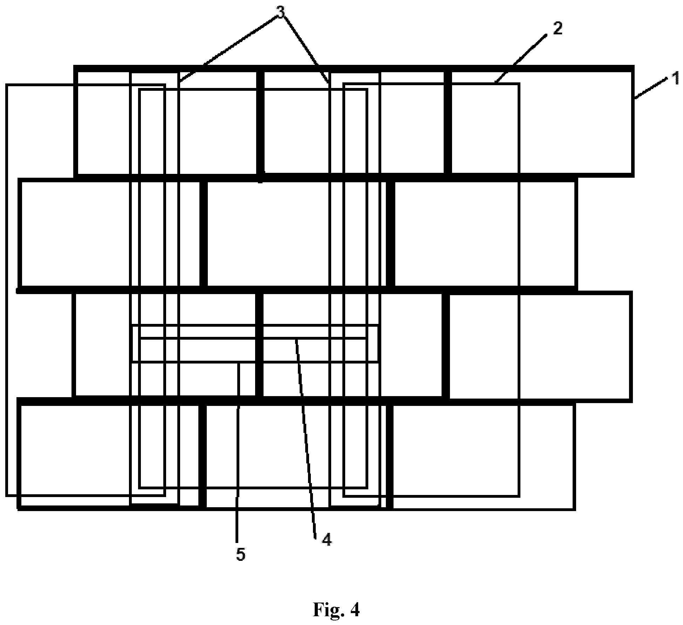

In terms of mounting, it is more convenient (but not obligatory) to place the additional electroconductive tape with the end overlapping of the waterproofing elements (Fig. 4), as in this case there is no need to fasten the additional tape separately (say, in the middle of the roll) and then fasten the waterproofing elements overlapping end. However, such combination is not mandatory, it is just the important that all PIR-boards are electrically interconnected into a united electroconductive base.

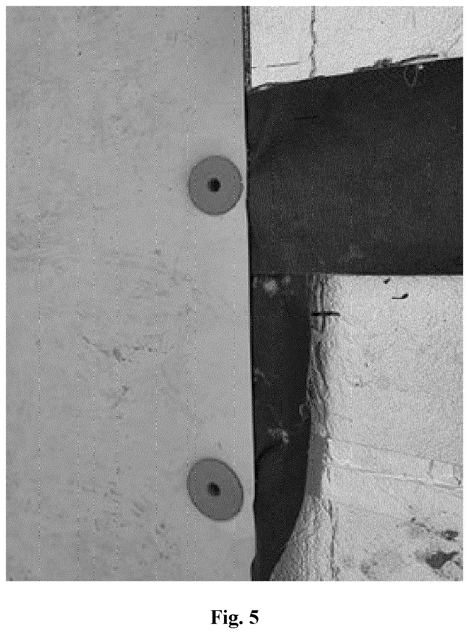

In addition, during the roof mounting there may be a need to connect the two electroconductive tapes with each other, in this case a tape overlap is formed followed by its fastening to the waterproofing and other elements in this area (Fig.5).

As a result of such arrangement of the electroconductive fabric tapes, they serve as jumper straps for electrical interconnection of heat-insulating boards and form an integrated electroconductive contour with the tapes. The known technical solutions contain no information about the PIR-boards electrical interconnection, which without the use of a separate layer of hydrophobic material has a negative impact on the waterproof roof durability in terms of its leak tightness and reduces the reliability of test results due to the poor contact between the adjacent boards and its deterioration over time.

The electroconductive tape (electroconductive fabric tape) comprises a strip of non-flammable reinforcing base (fiber glass fabric and the like) with any electroconductive layer applied thereon. The tapes can also comprise aluminum and steel tapes, reinforced polyethylene tapes with a duplicate electroconductive coating (nickel, magnesium, aluminum, steel and any other electrical conductors), tapes with graphite coatings, etc. The tapes are made from an electroconductive material comprising a fiber glass fabric with a electroconductive sputtering selected from nickel, magnesium, steel, aluminum, or graphite particles. In general, it can be any tape that can carry electric current. The width of the electroconductive tape may vary depending on the requirements, the manufacturing conditions, etc. Preferably, the tapes of width from 50 to 150 mm is used, as such width is usually sufficient for reliable heat-insulating PIR-boards interconnection in order to form a single electroconductive contour, and further increase of tape width is not reasonable.

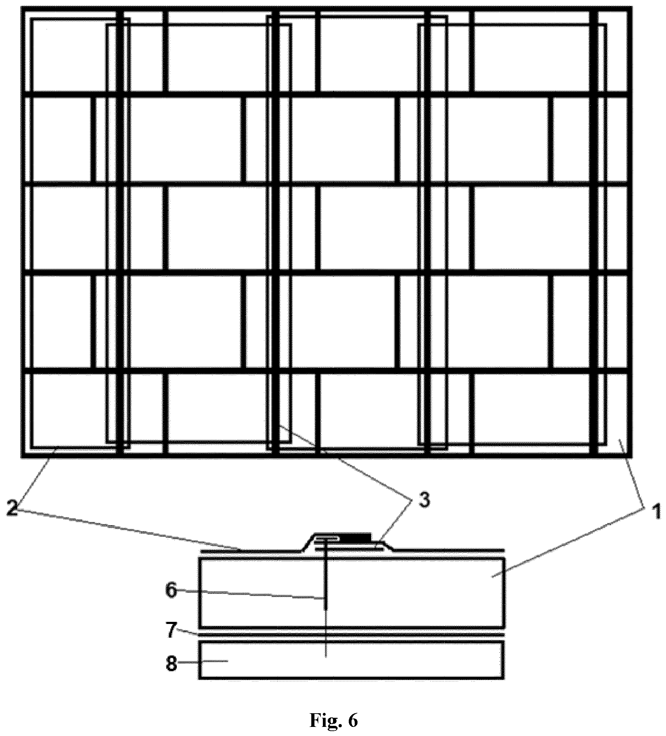

After the electroconductive fabric tapes are placed, the waterproofing membrane itself, the electroconductive tape and the PIR-boards, respectively, are mechanically fastened using the common fasteners. As a result, all installed roof layers (including the vapor barrier layer and the supporting base, which are also placed underneath the heat insulation layer) are fastened together. Fig. 6 shows a general mounting layout of the PIR-boards with the electroconductive tapes (at the top) and a side view of the mounted PIR-boards interconnected by the electroconductive tape (at the bottom), where 6 is a fastening element, 7 is a vapor barrier layer, 8 is a supporting base.

Any suitable fasteners for securing the tape to the other roof elements can be used for this purpose, such as standard roofing fasteners, which are screwed into the supporting base through the entire roofing tele, as the tape is clamped by waterproofing membrane, which requires a mechanical fixation. The mounting pitch of roof fasteners is defined by wind calculation: for example, it can constitute 200 - 250 mm. Such a mounting pitch provides a sufficiently large number of contacts between the tape and the heat-insulating boards electroconductive material: for example, with a board width of 1200 mm, at a mounting pitch of 200 - 250 mm there will be 4 - 5 fasteners per one board.

The following elements can be used as fasteners: polymeric telescopic elements and metal disk holders paired with drilled, pointed self-tapping screws, pointed self-tapping screws paired with anchor elements, self-tapping screws on concrete and similar roof fasteners, selected in accordance with the type of supporting base (for example, https://nav.tn.ru/catalog/krovlya/komplektatsiya-dlya-krovli/teleskopicheskiy-krepezh-tekhnonikol/,
https://nav.tn.ru/catalog/krovlya/komplektatsiya-dlya-krovli/kruglyy-tarelchatvy-derzhatel-tekhnonikol/?sphrase_id=660681, https://nav.tn.ru/catalog/krovlya/komplektatsiya-dlya-krovli/samorez-tekhnonikol/?sphrase_id=660686). Figures 1, 2 and 5 show the polymeric telescopic elements (red).

In process of the installation work, one connector for electrical equipment connection is installed per 2.000 - 2.500 m² of the roof area in order to enable performing diagnostic tests for the waterproof roof leak tightness. The connector comprises two flanges, between which the tape is clamped, with a rod that protrudes above the waterproofing element in order to be clearly visible and convenient to connect equipment for leakage detection.

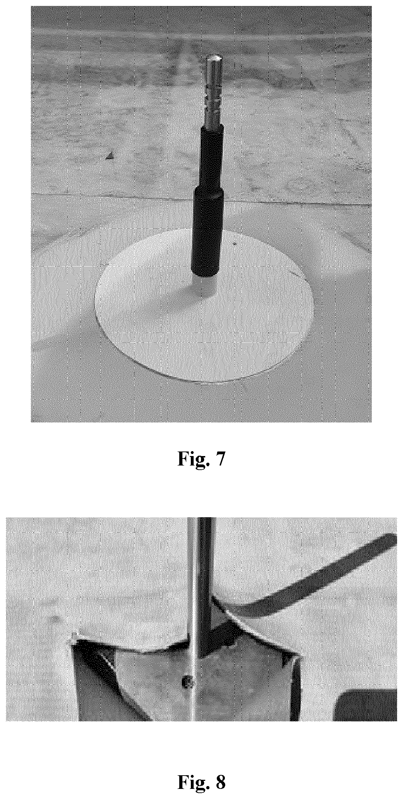

Connectors are installed in the location area of the electroconductive fabric tape in the spaces between its fastening points (for easier mounting). One connector is installed per 2.000 - 2.500 m² of the roof area between the roof fasteners. The tape is clamped between the connector flanges, while the connector itself is not fastened. After the connector is installed (and connected to the tape), its tight abutment is implemented in order to avoid leaks (Fig. 7 and Fig. 8). The abutment is enabled using a prefabricated PVC element, or manually, using a unreinforced PVC membrane to ensure tightness of the installed connector and absence of leakages.

The invention is illustrated by the following example of its implementation.

### Example 1.

Heat-insulating PIR-boards (1) are placed alternately (with offset board joints) onto a layer of vapor barrier (7), placed on a supporting base (8), which can be, for example, a corrugated board or any other base suitable for this purpose, with the longitudinal side oriented along a corrugated board (Fig. 6). When a waterproofing layer of waterproofing elements (2) such as a roll polymer membrane is then placed, an electroconductive fabric strip/tape (3) is placed beneath the lower waterproofing layer in the areas of overlapping joints (4) of longitudinal, i.e. located alongside, waterproofing elements (2). If the laying pattern of the boards does not provide the electrical interconnection of the adjacent boards with a single tape, an additional tape (5) is fastened to interconnect these boards. Then all layers of the pie are fastened - the waterproofing membrane composed of the waterproofing elements (2), the electroconductive tape (3, 5), the heat-insulating boards (1), the vapor barrier (7) and the corrugated boarding (8), using fasteners (6), such as telescopic elements or steel plates paired with a drill or sharp-tipped self-tapping screws or self-tapping screws on concrete. Furthermore, if there is a need to connect the two tapes with each other, an overlapping connection of the tape (3) is formed followed by its fastening to the waterproofing and other elements in this area (Fig. 5). As the installation work progresses, connectors are installed in the area of the electroconductive strip between the fasteners, in an amount of 1 connector per 2.000 - 2.500 m² of the roof area, depending on the roof geometry. The more complex the roof geometry is, the more connectors are required for installation. Installation involves clamping the electroconductive strip between the connector flanges.

The claimed waterproof roof does not require an additional separately mounted electroconductive base, and due to the use of the electroconductive fabric tapes as electrical jumper straps between all PIR-boards, durable electrical connection is preserved, and, therefore, the waterproof roof durability in terms of its leak tightness and reliability of the test results is also maintained.

Thus, the present invention provides a high-tech waterproof roof, enabling diagnostic tests for leak tightness of the waterproofing coating over a long period of operation. The roof can be easily and conveniently mounted and maintained with low costs. Since there is no need to use any additional electroconductive base layer during the implementation of the claimed invention, the waterproof roof ready for leak tightness diagnostic tests can be installed faster, and the cost of consumables per unit area for the electroconductive contour is significantly reduced.

## Claims

1. A waterproof roof comprising:
an electroconductive base and waterproofing elements (2) overlapped over the electroconductive base to form a waterproofing membrane,
wherein the electroconductive base is made of heat-insulating boards (1) made of polyisocyanurate foam (PIR) coated with an electroconductive material, and electroconductive contact tapes (3), the tapes (3) are placed over each of the heat-insulating boards (1) and secured to the waterproofing elements (2) and to the heat-insulating boards (1) to form an integrated electroconductive base combining all the heat-insulating boards (1).

2. The waterproof roof of claim 1, wherein the heat-insulating PIR-boards (1) are placed with the abutting joints alternately offset to each other.

3. The waterproof roof of claim 1, wherein the heat-insulating PIR-boards (1) are coated with the electroconductive material comprising an aluminum-based electroconductive material selected from aluminum foil and laminated aluminum.

4. The waterproof roof of claim 1, wherein the electroconductive tape (3) is located beneath overlapping joints (4) of the waterproofing elements (2).

5. The waterproof roof of claim 1, wherein the electroconductive tape (3) is located along the longitudinal side of the waterproofing element (2), and wherein an additional electroconductive tape (5) is secured along the transverse side of the waterproofing element (2) of the electroconductive base to electrically interconnect the adjacent heat-insulating boards (1), if the electroconductive tape (3) is not sufficient to electrically interconnect the adjacent heat-insulating boards (1).

6. The waterproof roof of claim 1, wherein the electroconductive fabric of the tape (3) comprises a fiber glass fabric with an electroconductive sputtering selected from nickel, magnesium, steel, aluminum, or graphite particles.

7. The waterproof roof of claim 1, wherein the heat-insulating boards (1) are fastened to the electroconductive tape (3) and to the waterproofing element (2) with a telescopic element or a steel plate element together with a drill or a sharp-tipped self-tapping screw, or a self-tapping screw on concrete.

8. The waterproof roof of claim 1, wherein a plurality of connectors is provided in the area of the electroconductive tape (3), the connectors are comprised of two flanges between which the electroconductive tape (3) is clamped, and a rod for connecting electrical equipment for testing the waterproof roof for leakages, the connectors present in an amount of 1 rod per 2.000 - 2.500 m² of the roof area.

9. A method of construction of the waterproof roof as per claim 1, the method comprising:
placing the heat-insulating boards (1) made of polyisocyanurate foam (PIR) coated with an electroconductive material beneath a sheet of overlapping waterproofing elements (2),
placing the electroconductive contact fabric tapes (3) over each of the heat-insulating boards (1) to form an integrated electroconductive base combining the heat-insulating boards altogether, and
securing the electroconductive tapes (3) to the waterproofing elements (2) and to the heat-insulating boards (1) with the use of the mechanical fasteners (6).

10. The method of claim 9, wherein the heat-insulating PIR-boards (1) are placed with the abutting joints alternately offset to each other.

11. The method of claim 9, wherein the electroconductive tape (3) is placed beneath overlapping joints (4) of the waterproofing elements (2).

12. The method of claim 9, wherein the electroconductive tape (3) is located along the longitudinal side of the waterproofing element (2), and wherein an additional electroconductive tape (5) is secured along the transverse side of the waterproofing element (2) of the electroconductive base to electrically interconnect the adjacent heat-insulating boards (1), if the electroconductive tape (3) is not sufficient to electrically interconnect the adjacent heat-insulating boards (1).

13. The method of claim 9, wherein a telescopic element or a steel plate element together with a drill or a sharp-tipped self-tapping screw, or a self-tapping screw on concrete is used as the mechanical fastener (6).

14. The method of claim 9, wherein the mounting pitch of the mechanical fasteners (6) constitutes from 200 to 250 mm.

15. The method of claim 9, wherein a plurality of connectors is provided for the electroconductive tape (3), the connectors comprised of two flanges between which the electroconductive tape (3) is clamped, with a rod for connecting electrical equipment for testing the waterproof roof for leakages, in an amount of one rod per 2.000 - 2.500 m² of the roof area.
